# EUROPÄISCHE PATENTSCHRIFT

(11) **EP 1 543 797 B1**
(45) Veröffentlichungstag und Bekanntmachung des Hinweises auf die Patenterteilung: **10.12.2008**
(21) Anmeldenummer: 03028902.9
(22) Anmeldetag: 17.12.2003
(51) Int. Cl.: A61C 13/00, A61C 13/20

(54) **Verfahren zum Herstellen einer dentalkeramischen Struktur**
Method for the fabrication of a dental-ceramic structure
Méthode de fabrication d'une structure dentaire en céramique

(43) Veröffentlichungstag der Anmeldung: 22.06.2005
(73) Patentinhaber: DeguDent GmbH, 63457 Hanau-Wolfgang (DE)
(72) Erfinder: Fecher, Stefan, 63867 Johannesberg (DE); Völkl, Lothar, Dr., 63773 Goldbach (DE)
(74) Vertreter: Stoffregen, Hans-Herbert

(56) Entgegenhaltungen:
- WO-A-03/017864
- DE-A- 10 136 584
- US-A- 5 092 022

## Beschreibung

Die Erfindung bezieht sich auf ein Verfahren zur Herstellung einer dentalkeramischen Struktur, insbesondere zum An-, Über- oder Umpressen eines Gerüstes aus Metall oder Keramik, unter Verwendung einer zwei Abschnitte aufweisenden Muffel, die einen Negativform der Struktur entsprechenden Hohlraum begrenzen, in den über zumindest einen Angusskanal fließfähiges Material zugeführt wird,

Ein entsprechendes Verfahren ist zum Beispiel aus der DE-A-196 30 412 zur Herstellung eines keramischen Dentalaufbaus bekannt. Dabei erfolgen die Verfahrensschritte Abdruck der Mundsituation mit eingesetztem keramischen Wurzelstift, Herstellung eines Modells aus dem Abdruck, wobei der Stift aus dem Modell herausragt, Modellation einer Rekonstruktion aus einem ausbrennbaren Material, Ansetzen eines Gusskanals, Einbetten von Stift und angewachsten Teilen in eine Muffel mit einer aushärtbaren Einbettmasse, Entfernen des Wachses durch Erhitzen und schließlich Pressen der Keramik.

Die Güte der dentalkeramischen Struktur hängt dabei zum einen von dem handwerklichen Geschick des Zahntechnikers ab, der die Modellation der Rekonstruktion vornimmt und zum anderen von der Ausbildung des Hohlraums mit der Einbettmasse, die die Modellation umgibt.

Ein entsprechendes Verfahren ist auch der DE-A-101 36 584 A1 zu entnehmen.

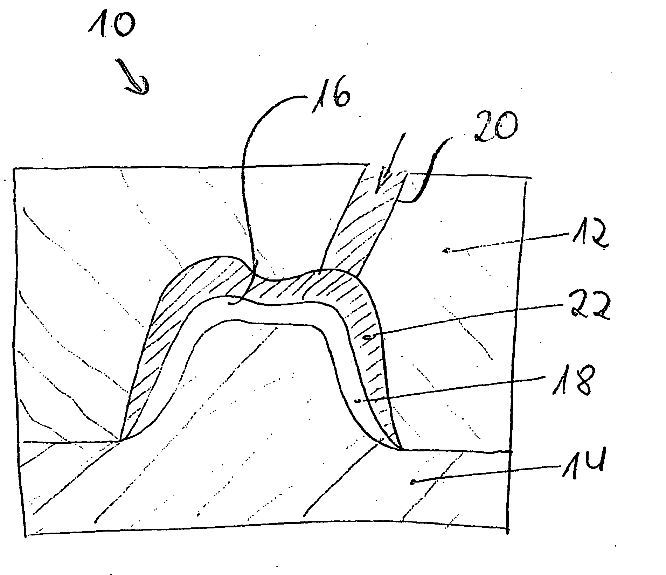

Aus der US-A-5,092,022 ist ein Verfahren zur Herstellung zahnärztlicher Prothesen bekannt. Dabei wird nach dem Ausführungsbeispiel der Fig. 27 in einem zum Beispiel aus Metall bestehenden Block ein Formteil unter Zugrundelegung abgespeicherter Daten spanend ausgebildet, das der Außengeometrie einer herzustellenden dentalkeramischen Struktur entspricht. Der so gebildete Hohlraum wird von einem ein metallisches Gerüst aufnehmenden Formteil begrenzt. Zwischen den Formteilen verläuft ein Angusskanal, in dem flüssiges Material wie synthetischer Harz eingebracht wird.

Der vorliegenden Erfindung liegt das Problem zugrunde, ein Verfahren der eingangs genannten Art so weiterzubilden, dass hochpräzise dentalkeramische Strukturen zur Verfügung gestellt werden, bei denen Unzulänglichkeiten aufgrund manuellen Eingriffs weitgehend vermieden werden.

Zur Lösung des Problems sieht die Erfindung folgeende Verfahrensschritte vor:
a) Digitalisieren eines Modells oder Teilmodells des herzustellenden Zahnersatzes und Generieren eines CAD-Datensatzes des herzustellenden Zahnersatzes,
b) spanendes Bearbeiten jeden Abschnitts der Muffel unter Zugrundelegung des CAD-Datensatzes zum Ausbilden des Hohlraums,
c) Einpressen von Keramik als das zuzuführende Material in den Hohlraum über den zumindest einen Angusskanal,
d) nach Aushärten der Keramik Entfernen der Struktur aus dem Hohlraum mit von der Struktur ausgehendem Angusskanal oder Ansatz von diesem und
e) Entfernen des Angusskanals bzw. des Ansatzes unter Zugrundelegung des CAD-Datensatzes der herzustellenden Struktur.

Insbesondere zeichnet sich das Verfahren, bei dem die dentalkeramische Struktur ein Gerüst umfasst, dadurch aus, dass nach Ausbilden des Hohlraums (Verfahrensschritt b) in diesem das Gerüst angeordnet wird, sodann die Keramik in den Hohlraum über dem Gerüst einge presst wird und schließlich die Verfahrensschritte d) und e) durchgeführt werden.

Der Formhohlraum wird insbesondere aus ausgehärteter Einbettmasse ausgebildet.

Erfindungsgemäß erfolgt ein Verpressen bzw. Überpressen von Gerüsten für zum Beispiel Kronen oder Brücken in automatisierter Herstellung auf der Basis von CAD-Daten. Hierzu wird zum Beispiel durch Fräsen Negativform der herzustellenden Struktur in einen geeigneten Rohling wie Einbettmasse herausgearbeitet. Das Volumen des einzupressenden Keramikmaterials ergibt sich sodann aus der aufgrund der CAD-Daten erhaltenen Geometrie und somit deren Volumen abzüglich des Volumens eines vorgefertigten und eingesetzten Gerüsts. Sodann erfolgt das Aufpressen bzw. Umpressen des Gerüsts mit der Presskeramik. Anschließend kann die dentale Struktur wie Krone oder Brücke aus der Form entfernt werden, um grundsätzlich unmittelbar benutzt zu werden. Gegebenenfalls ist eine minimale Nachbearbeitung erforderlich.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden bevorzugten Ausführungsbeispiels.

In der einzigen Figur ist eine Muffel 10 dargestellt, die aus zusammengesetzten Abschnitten 12, 14 besteht. Die Abschnitte 12, 14 begrenzen einen Hohlraum 22, in dem eine dentalkeramische Struktur durch Umpressen eines Gerüstes 18 hergestellt werden soll.

Die Innengeometrie des Hohlraums 22 wird auf der Basis von CAD-Daten der herzustellenden dentalkeramischen Struktur aus die Abschnitte 12, 14 bildende Rohlinge durch maschinell wie spanende Bearbeitung wie Fräsen hergestellt.

Das von dem Gerüst 18 nicht ausgefüllte Volumen des Hohlraums 22 wird aufgrund der zur Verfügung stehenden CAD-Daten berechnet, um sodann über einen Angusskanal 20 Presskeramik (schraffierter Bereich 22) einzupressen. Nach dem Aushärten werden die Abschnitte 12, 14 voneinander getrennt, die dentalkeramische Struktur entfernt und sodann der Ansatz des Angusskanals 20 entfernt. Dies kann automatisch erfolgen, da hierzu zur Verfügung stehende CAD-Daten benutzt werden können.

Zur Generierung der CAD-Daten kann ausgehend von einer zahnärztlichen Präparation von dem bzw. den Zahnstümpfen ein Abdruck angefertigt werden, der ein Negativmodell der Situation im Mund des Patienten abformt. Dabei werden Oberfläche des oder der Zahnstümpfe, Aproximalflächen der Nachbarzähnen und Gegenbiss ermittelt. Von dieser Abformung wird ein vorzugsweise aus Gips oder Kunststoff bestehendes Positivmodell gewonnen. Sodann kann unter Berücksichtigung der von dem Positivmodell durch Scannen ermittelten Daten die dentalkeramische Struktur berechnet werden, um die aufgrund der sodann zur Verfügung stehenden CAD-Daten die Abschnitte 12, 14 der Muffel 10 maschinell wie spanend zu bearbeiten, um insgesamt den Hohlraum 22 auszubilden.

Alternativ kann auf das Positivmodell eine Modellation für die dentalkeramische Struktur angefertigt werden, wobei sich auf dem bzw. den Zahnstümpfen ein entsprechendes Gerüst für eine Krone bzw. eine Brücke befindet. Das fertig hergestellte Modell wird sodann gescannt, um aufgrund dieser Daten den Hohlraum 22 in der Muffel 10 ausarbeiten zu können. Dabei ist es selbstverständlich erforderlich, dass die Daten des eingesetzten Gerüstes berücksichtigt werden.

Sodann wird die Muffel in ein bekanntes Muffelsystem eingebracht, um über die Angausskanäle 20 fließfähige Keramik in den Hohlraum 22 bzw. dem von dem Gerüst 18 nicht ausgefüllten Hohlraum einzupressen. Zum Verpressen werden in gewohnter Weise Pressstempel benutzt. Insoweit wird jedoch auf hinreichend bekannte Techniken und Konstruktionen verwiesen.

Da erwähntermaßen die Daten des Hohlraums und damit die Außengeometrie der fertigen dentalkeramischen Struktur zur Verfügung steht, bereitet es keine Schwierigkeiten, den Ansatz des Angusskanals 20 automatisch zu entfernen.

## Patentansprüche

1. Verfahren zur Herstellung einer dentalkeramischen Struktur, insbesondere zum An-, Über- oder Umpressen eines Gerüstes aus Metall oder Keramik, unter Verwendung einer zwei Abschnitte aufweisenden Muffel, die einen Negativform der Struktur entsprechenden Hohlraum begrenzen, in den über zumindest einen Angusskanal fließfähiges Material zugeführt wird, wobei
die folgenden Verfahrensschritte durchgeführt werden:
a) Digitalisieren eines Modells oder Teilmodells des herzustellenden Zahnersatzes und Generieren eines CAD-Datensatzes des herzustellenden Zahnersatzes,
b) spanendes Bearbeiten jeden Abschnitts der Muffel unter Zugrundelegung des CAD-Datensatzes zum Ausbilden des Hohlraums,
c) Einpressen von Keramik als das zuzuführende Material in den Hohlraum über den zumindest einen Angusskanal,
d) nach Aushärten der Keramik Entfernen der Struktur aus dem Hohlraum mit von der Struktur ausgehendem Angusskanal oder Ansatz von diesem und
e) Entfernen des Angusskanals bzw. des Ansatzes unter Zugrundelegung des CAD-Datensatzes der herzustellenden Struktur.

2. Verfahren nach Anspruch 1,
wobei die dentalkeramische Struktur ein Gerüst umfasst,
**dadurch gekennzeichnet,**
**dass** nach Ausbilden des Hohlraums (Verfahrensschritt b) in diesem das Gerüst angeordnet wird, sodann die Keramik in den Hohlraum über dem Gerüst eingepresst wird und schließlich die Verfahrensschritte d) und e) durchgeführt werden.

3. Verfahren nach Anspruch 1,
**dadurch gekennzeichnet,**
**dass** der Formhohlraum aus ausgehärtetem Einbettmassematerial ausgebildet wird.

4. Verfahren nach Anspruch 1,
**dadurch gekennzeichnet,**
**dass** die Abschnitte durch Fräsen oder Schleifen spanend bearbeitet werden.

5. Verfahren nach Anspruch 1,
**dadurch gekennzeichnet,**
**dass** mehrere in dem Formhohlraum mündende Angusskanäle für die einzupressende Keramik ausgebildet werden.

## Claims

1. A method of producing a dental ceramic structure, in particular for pressing against, over or around a framework made of metal or ceramic, using a muffle having tow sections which define a cavity corresponding to the negative shape of the structure, flowable material being supplied into the cavity via at least one sprue, whereby the following method steps are carried out:
a) digitzing a model or partial model of the dental prosthesis to be produced and generating a CAD data set of the dental prosthesis to be produced,
b) cutting each section of the muffle based on the CAD data set to form the cavity,
c) pressing the ceramic, as the material to be supplied, into the cavity by way of the least one sprue,
d) after hardening the ceramic, removing the structure from the cavity with the sprue or lug thereof extending from the structure, and
e) removing the sprue or lug on the basis of the CAD data set of the structure to be produced.

2. The method according to claim 1,
whereby the dental ceramic structure comprises a framework,
**characterized in**
**that** after the cavity has been formed (method step b) the framework is arranged in said cavity, the ceramic then being pressed into the cavity over the structure and finally method steps d) and e) being effected.

3. The method according to claim 1,
**characterized in**
**that** the mould cavity is surrounded by a hardened embedding substance material.

4. The method according to claim 1,
**characterized in**
the sections are cut by milling or grinding.

5. The method according to claim 1,
**characterized in**
**that** a plurality of sprues opening into the mould cavity are formed for the ceramic to be injected.

## Revendications

1. Méthode de fabrication d'une structure dentaire en céramique, en particulier pour être pressée contre, sur et autour d'une armature en métal ou céramique en utilisant un moufle présentant deux parties qui limitent une cavité correspondant au moule négatif de la structure, dans laquelle du matériau pouvant couler est introduit par l'intermédiaire d'au moins un canal d'injection, sachant que le procédé comprend les étapes suivantes :
a) Numérisation d'un modèle ou modèle partiel de la prothèse dentaire à fabriquer et enregistrement de données CAO de la prothèse dentaire à fabriquer,
b) traitement par enlèvement de copeaux de chaque partie du moufle en fonction des données CAO pour former la cavité,
c) pressage de la céramique en tant que matériau à introduire dans la cavité par l'intermédiaire du canal d'injection au moins en présence,
d) après durcissement de la céramique, retrait de la structure de la cavité avec le canal d'injection partant de la structure ou la projection de celui-ci et
e) retrait du canal d'injection ou de sa projection en fonction des données CAO de la structure à fabriquer.

2. Procédé selon la revendication 1,
sachant que la structure dentaire en céramique comprend une armature,
**caractérisé en ce**
**que,** après formation de la cavité (étape b du procédé), l'armature y est mise en place puis la céramique est pressée sur l'armature, et enfin les étapes d) et e) du procédé sont réalisées.

3. Procédé selon la revendication 1,
**caractérisé en ce**
**que** la cavité du moule est formée dans un matériau d'enrobage durci.

4. Procédé selon la revendication 1,
**caractérisé en ce**
**que** les parties du moufle sont traitées par enlèvement de copeaux par fraisage ou polissage.

5. Procédé selon la revendication 1,
**caractérisé en ce**
**que** plusieurs canaux d'injection aboutissant dans la cavité du moule sont formés pour la céramique à presser.
